# EUROPEAN PATENT APPLICATION

(11) **EP 4 746 286 A1**
(43) Date of publication of application: **20.05.2026**
(21) Application number: 24383247.4
(22) Date of filing: 18.11.2024
(51) Int. Cl.: H02S 20/24, F24S 25/11

(54) **SUPPORT SYSTEM FOR PHOTOVOLTAIC MODULES ON A FLAT ROOF**

(71) Applicant: Orbis Italia S.p.A., 20051 Cassina de' Pecchi (MI) (IT)
(72) Inventor: BREDA, Claudio, 20051 CASSINA DA PECHI (Milano) (IT)
(74) Representative: Riera Blanco, Juan Carlos

(57) **Abstract**

The invention provides a support system for photovoltaic modules on flat roofs that does not need to be anchored to the surface of the support, formed by a cement agglomerate base wrapped at its ends by two recycled rubber housings, each housing having an integrated aluminum guide to guide and fix the photovoltaic module and one or more tilting lifting elements. To increase stability, the support system may include an additional ballast and a perimeter belt attached to the housings around its perimeter. The support system does not need to be anchored to the horizontal roof or other horizontal surface.

## Description

The present invention provides a support system for photovoltaic modules on a flat roof.

The support system for photovoltaic modules on a flat roof, hereinafter referred to as the "support system of the invention", allows the arrangement of photovoltaic modules on a roof or horizontal surface without the need to use additional means of anchoring or fixing to said surface, such as anchor plugs or similar.

In recent years, the installation of photovoltaic modules in homes or buildings has greatly increased, due, among other things, to the need for energy savings and the awareness of the general population regarding environmental care.

Very often photovoltaic installations are located in buildings, normally on an existing roof, or are integrated into elements of the building's own structure, such as skylights, rooflights or facades. To do this, the photovoltaic modules, made up of numerous photovoltaic cells, are arranged on supports fixed to surfaces oriented towards the greatest possible capture of solar energy.

In the case of an installation on an inclined surface, for example a tiled roof, the supports are usually fixed using threaded rods or support hooks.

In the case of installation on a flat surface, the supports are made up of brackets that are fixed with the most suitable inclination to capture the maximum amount of sunlight, generally weighted with a heavy material to avoid a possible sail effect caused by the wind.

Thus, for example, document JP2017002656A describes a support for photovoltaic modules on a flat roof formed by a cement base with an inclined upper face, said support has elements for anchoring the module to its upper face. The supports do not need to be anchored to the horizontal roof or another horizontal surface. Document JP2011165795A discloses a support for photovoltaic modules on a flat roof, consisting of a cement agglomerate base with an inclined support surface and anchoring means for the photovoltaic modules. The supports may have a perimeter belt fixed to the casings. The supports do not need to be anchored to the horizontal roof or another horizontal surface.

Document CN107493060A describes a support for photovoltaic modules on a flat roof, consisting of a cement agglomerate base with an inclined upper surface. Said upper surface has two guides intended to guide one or more lifting supports. This support may have a ballast and a perimeter belt fixed to the casings. The supports do not need to be anchored to the horizontal roof or another horizontal surface.

Document EP4368912A1 describes a support system for photovoltaic modules on a flat roof where at least two elements are formed by a cement base that has guides for the anchors for fixing the module.

The installation of these supports already known in the State of the Art presents certain disadvantages, especially with regard to their high weight and the difficulty of adjusting the inclination of the photovoltaic modules.

The present invention solves the disadvantages of the known supports, providing a support system for photovoltaic modules on a flat roof that does not need to be anchored to the surface of the support, formed by a cement agglomerate base wrapped at its ends by respective recycled rubber casings, each of said casings having an integrated aluminium guide to guide and fix a photovoltaic module and one or more lifting tilting elements. To increase stability, the support system can include an additional ballast and a perimeter belt fixed to the casings on its perimeter. The support system does not need to be anchored to the horizontal roof or another horizontal surface.

The invention is described below with reference to an embodiment thereof and in accordance with the attached figures, in which:
Figure 1: shows a diagram of the support system for photovoltaic modules on a flat roof.
Figure 2: shows the support system of Figure 1 with a photovoltaic module in an inclined state.
Figure 3: shows a detail of the casings;
Figure 4: shows an arrangement of several support systems joined by a perimeter belt with corresponding photovoltaic modules.

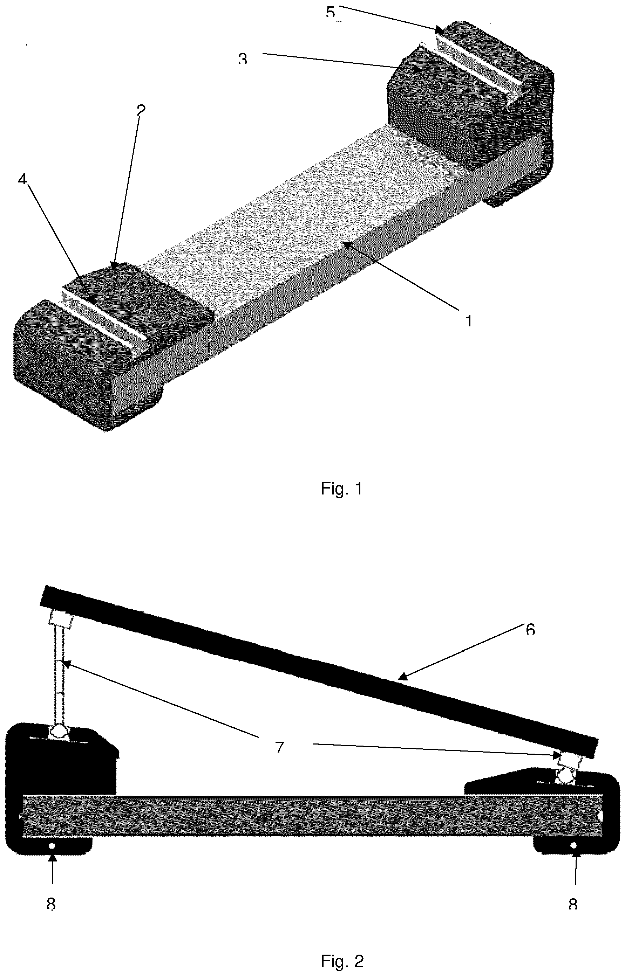

Thus, and as can be seen in Figure 1, the support system of the invention is formed by a base (1) of cement agglomerate whose ends are embraced by respective recycled rubber casings (2, 3) that extend over the upper face of the base (1). The rubber casings (2, 3) have a different height with respect to each other. Said casings (2, 3) have integrated transverse guides (4, 5) for fixing a photovoltaic module (6) by means of the appropriate clamps.

Referring to figure 2, said transverse guides (4, 5) also house at least one extendable vertical lifting element (7) that allows the angle formed by the photovoltaic module (6) with respect to the base (1) to be modified.

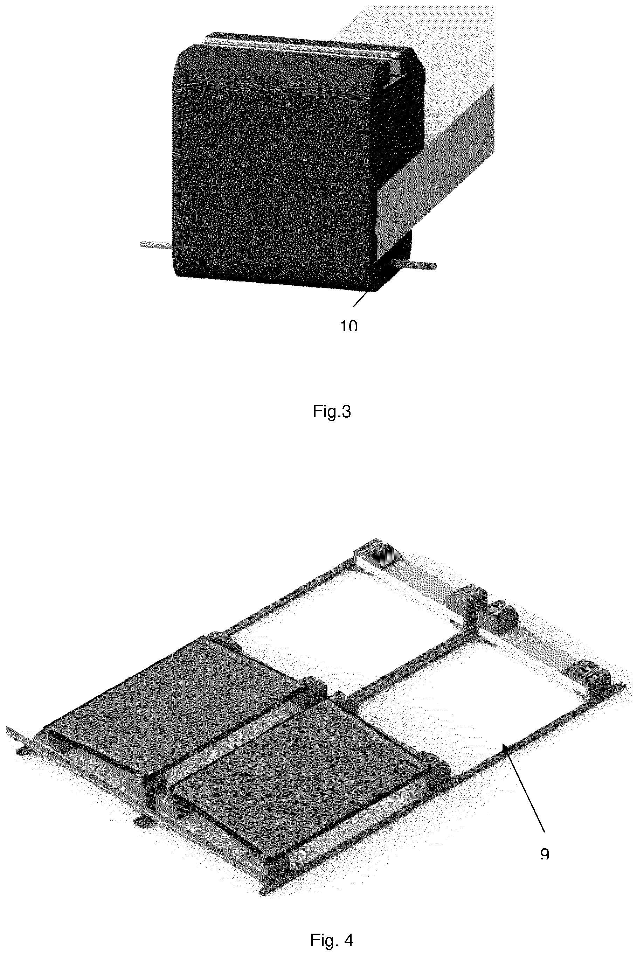

As can be seen in figures 2, 3 and 4, the casings (2, 3) have a through hole (8) in their lower part for connection to a perimeter belt (9) by means of a corresponding joining element (10), such as a bolt or a screw. This perimeter belt (9) allows the joining of several support systems to each other to support several photovoltaic modules, as well as to guarantee greater resistance to wind load.

## Claims

1. Support system for photovoltaic modules on a flat roof, **characterized by** being formed by a cement agglomerate base (1) whose ends are embraced by two recycled rubber casings (2, 3) of different relative height, which extend over the upper face of the base (1), the casings (2, 3) presenting two integrated transverse guides (4, 5) for fixing a photovoltaic module (6) by means of suitable clamps.

2. Support system for photovoltaic modules on a flat roof according to claim 1, where said transverse guides (4, 5) house at least one tilting vertical lifting element (7) that allows the angle formed by the photovoltaic module (6) with respect to the base (1) to be modified.

3. Support system for photovoltaic modules on a flat roof according to claim 1, wherein the housings (2, 3) have a through hole (8) in their lower part for connection to a perimeter belt (9) by means of a corresponding connecting element (10).
